# EUROPEAN PATENT SPECIFICATION

(11) **EP 3 329 678 B1**
(45) Date of publication and mention of the grant of the patent: **26.06.2019**
(21) Application number: 16748343.7
(22) Date of filing: 22.07.2016
(51) Int. Cl.: H04N 19/58, H04N 19/59, H04N 19/42

(54) **METHOD AND APPARATUS FOR COMPRESSING VIDEO DATA**
VERFAHREN UND VORRICHTUNG ZUR KOMPRIMIERUNG VON VIDEODATEN
MÉTHODE ET APPAREIL POUR COMPRESSER DES DONNÉES VIDEO

(30) Priority: 31.07.2015 GB 201513610
(43) Date of publication of application: 06.06.2018
(73) Proprietor: Forbidden Technologies, PLC, Wimbledon, London SW19 4EU (GB)
(72) Inventor: STREATER, Stephen, Wimbledon London SW19 4PH (GB)
(74) Representative: Eve, Rosemary Margaret
(86) International application number: PCT/GB2016/052223
(87) International publication number: WO 2017/021688

(56) References cited:
- EP-A2- 1 349 396
- US-A- 5 126 841
- US-A1- 2004 150 747
- US-A1- 2006 239 344
- US-A1- 2012 027 095
- US-A1- 2015 078 449
- WIEGAND T ET AL: "Overview of the H.264/AVC video coding standard", IEEE TRANSACTIONS ON CIRCUITS AND SYSTEMS FOR VIDEO TECHNOLOGY, IEEE SERVICE CENTER, PISCATAWAY, NJ, US, vol. 13, no. 7, 1 July 2003 (2003-07-01), pages 560-576, XP011221093, ISSN: 1051-8215, DOI: 10.1109/TCSVT.2003.815165

## Description

### Background

Historically, video was principally professionally made, using expensive (and heavy) cameras, usually sitting on expensive and very stable tripods. One effect of this was to bias the video content itself to contain little camera movement, with relatively little camera acceleration and almost no camera rotation. Traditional video codecs, such as MPEG, meet the need for streaming such content.

The arrival of camera phones is changing the way video is made. Now, the cameras themselves have relatively low mass compared with traditional cameras, and in general use are often moved erratically - with pans, rotation and, in the case of selfies in particular, rapid zooms. In addition, the relatively small lenses restrict the light which can reach the sensor, making the source content often noisier than on a professional camera. In addition, despite all the additional complications with the source content, mobile devices have limited and sometimes expensive bandwidth and limited processing power. This invention is a video codec designed to address, amongst other things, issues relating to real time capture, compression, sharing and playback of video over limited bandwidth on a modern mobile phone.

For the purposes of this patent, I have called the invention described herein "Blackbird 8".

Patent document US 2006/239344 A1 discloses a method for encoding a series of frames containing one key frame. Frames are decimated (downsampled) by averaging groups of pixels.

Patent document EP 1349396 A2 discloses a method that assigns video blocks to different prediction groups and encodes the video blocks using the reference blocks depending on the one of the prediction groups to which the video block is assigned. The prediction groups are generated based on the frame number so that frames having an even number are assigned to one group while frames having an odd number are assigned to a second group.

### Statement of invention

The present invention, in accordance with a first aspect is directed to a method of encoding a series of frames in a video or media as set out in claim 1. The present invention, in accordance with a second aspect is directed to an encoder for carrying out the steps of claim 1.

Preferred embodiments of the present invention will now be described by way of example only and with reference to the accompanying drawings in which:
Figure 1 (a) shows a temporal sequence of frames of a video with frames split into blocks,
Figures 1 (b) - (d) shows an exemplary variety of block representations,
Figure 2 (a) and (b) show the derivation of mini blocks from a frame,
Figure 3 shows the search pattern followed to reach a candidate motion vector, and
Figure 4 shows frames adjacent to the frame being compressed.

### Bitstream format capabilities

The video codec has two parts - an encoder and a decoder. The decoder must be installed on all playback devices, so is not changed very often. The encoder, on the other hand, only has to be installed on the device making the recording. Provided the encoder stays compatible with the installed base of decoders, it can be changed at will, such as with each update to an app. In accordance with the present disclosure, the present invention (Blackbird 8) has a flexible bitstream format which allows refinements and variations to the compression, or encoding, without needing to change the decoders in any devices - though optimisations to the decoder which read the same or earlier bitstream formats are expected.

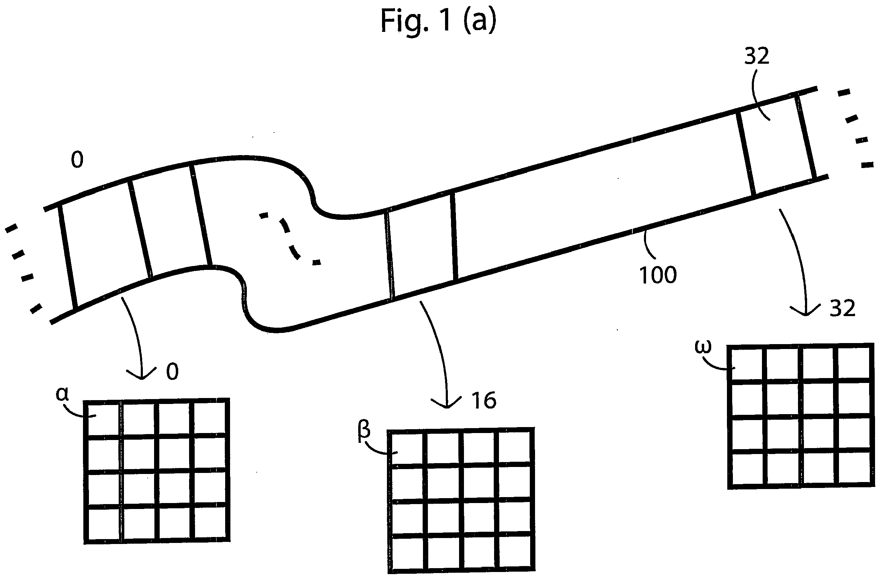

The bitstream format provides for videos of a wide range of sizes - such as but not limited to: 3840x2160 (4k), 1920x1080 (1080p), 1280x720 (720p), 640x360 (360p), 432x240, 384x288, 384x216, 320x240 and 320x180 - in each case with the video frames split into preferably rectangular blocks. This can be seen in Figure 1 (a), which shows a temporal sequence of frames of a video, starting with frame 0 and ending with frame 32: Figure 1 (a) also shows a representation of frames 0 and 32 split into rectangular blocks.

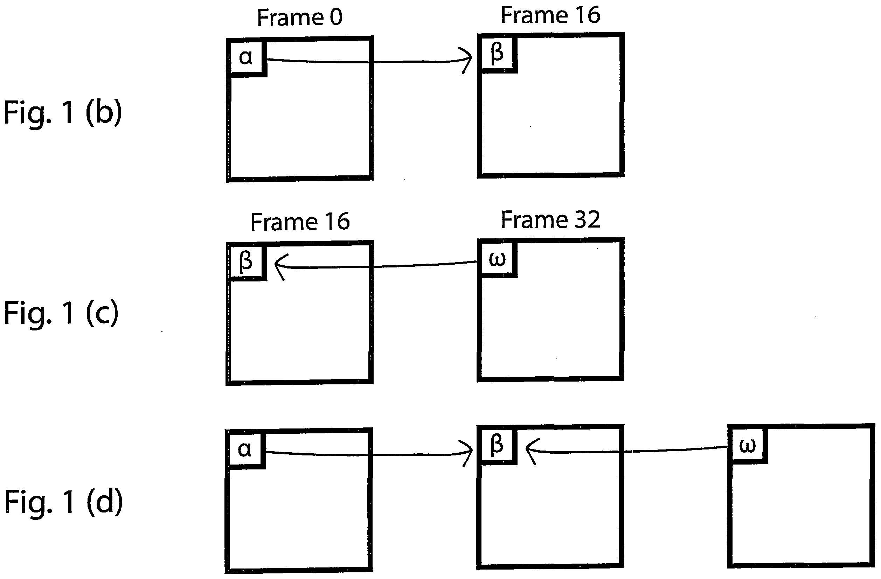

The bitstream format includes information as to which of several pre-defined formats have been utilised for each block during encoding, and this information is available and used during decoding. In one format, shown in Figure 1 (b) the block representation is based on a block which has occurred earlier in the video, for example in Figure 1 (b) block β of frame 16 is based on block α of frame 0. In another case, shown in Figure 1 (c) the block representation is based on a block which occurs later in the video, for example in Figure 1 (c) block β of frame 16 is based on block co of frame 32. In a third case, shown in Figure 1 (d) the block representation is based on information from both earlier and later blocks, for example in Figure 1 (d) block β of frame 16 is based on block α of frame 0 and block co of frame 32. Note that in all representations the blocks on which a block β is based may not line up with the rectangular blocks which block α on frame zero or block co on frame 32 are split up into. In a fourth representation, the block representation does not make use of information from either earlier or later blocks.

In addition, the bitstream format includes motion vectors, and the decoding steps include decoding such motion vectors for each block. The bitstream format may also contain simple adjustments across blocks which when decoded and applied, make decoded blocks a more accurate representation of the compressed block. In certain cases, for example in the fourth representation above, the decoding step includes decoding blocks which have been encoded utilising the intra frame compression option, for example utilised for any block whose compressed representation does not depend on any other frame or part of the frame.

### Filter on source

Forbidden's codecs have traditionally included a filter stage to remove noise. Filtering before knowledge of the motion adds compression artefacts to the video, and so to minimise these filtering artefacts caused by motion, in accordance with the present invention, filtering is applied after the motion estimation stages of the codec. The motion search which leads to the motion vectors for each block is quite accurate, and an advantage of filtering after motion estimation can be best illustrated by considering for example an image for an object which may be present in several frames. Each of the several frames will include information about the object and information may be combined and used or relied upon in any, some or all of the appropriate frames in order to create a temporally more consistent representation of the object - but only if the filter handles corresponding pixels from the version of each object in each frame, i.e. only if the filter is applied after motion compensation.

### Compressor chunks

The video frames can be thought of as being grouped in chunks. Each chunk contains a key frame and, apart from the earliest chunk, a number of delta frames. Referring again to Figure 1 (a), frames 0 (a first chunk) and 32 (part of a second chunk comprising frames 1 to 32) are contemplated to be key frames and all the frames 1 to 31 between, including frame 16, are contemplated to be delta frames. The number of frames between key frames is preferably one less than a power of two (a power of two if a key frame at one end is included), and then delta frames are recursively constructed from the nearest preceding and subsequent key frames and/or delta frames by subdividing the time between existing constructed frames by, for example, two and adding a frame at this time until all the frames at each separation are constructed.

For example, referring again to Figure 1 (a), when seeking to construct intermediate (delta) frames, the nearest preceding key frame is frame 0 and the nearest subsequent key frame is frame 32, so dividing the time between these two key frames by two and adding a frame at that time will provide us with frame 16, constructed from key frames 0 and 32. Delta frame 8 can then be constructed from nearest preceding key frame 0 and nearest subsequent delta frame 16, and in a similar manner all the frames intermediate frame 0 and frame 32 can be constructed.

The method of compression of the key frames, which use their own intra frame compression techniques, is not described in this invention, which covers the compression and decompression of the delta frames.

### YUV

The luminance (Y) and the colour components (e.g. UV) can be compressed individually, or more efficiently from a data rate standpoint, together, in which case the motion vectors for each block are applied to Y, U and V.

### Motion search blocks

As discussed, the video or other media being compressed is composed of frames, and in accordance with the present invention these frames are split into blocks each of which are contemplated to have their own motion vectors. It is convenient, though not necessary, for these blocks all to be the same size, and for this size to be a divisor of the image size. These blocks are additionally converted into mini blocks, where an integer number of blocks of the size of the mini blocks can tile a block the size of the bigger blocks. These blocks may be square, but this is not necessary.

For example only, some typical video images sizes are set out below, with corresponding big block and mini block sizes (in pixels). The invention is not limited to the exemplary image and block sizes set out herein.

Image size: 1920x1080 (1080p)
Big block size: 30x30
Small block size: 5x5
Image size: 1280x720 (720p)
Big block size: 20x20
Small block size: 4x4

Image size: 640x360 (360p)
Big block size: 20x20
Small block size: 5x5

Image size: 432x240
Big block size: 16x16
Small block size: 4x4

Image size: 384x288
Big block size: 16x16
Small block size: 4x4

Image size: 384x216
Big block size: 12x12
Small block size: 4x4

Image size: 320x240
Big block size: 16x16
Small block size: 4x4

Image size: 320x180
Big block size: 10x10
Small block size: 5x5

Implementation is simplest when the following conditions are met:
1. Big blocks tile the image (i.e. each frame of the video).
2. The horizontal and vertical pixel sizes of the mini blocks are divisors of the horizontal and vertical pixel sizes of the big blocks to which they correspond.
3. There are sufficient big blocks that each big block has a corresponding big block on earlier frames, later frames, or both, which match the similar image content.
4. The mini blocks are large enough to have enough content to match motion vectors accurately.

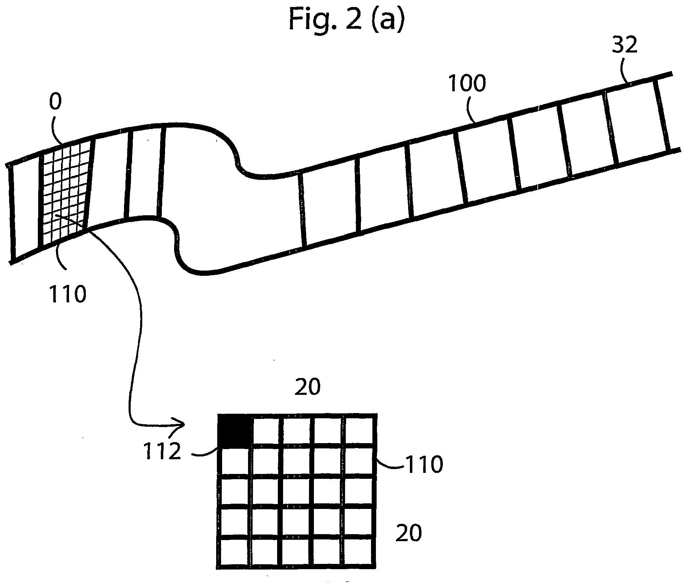

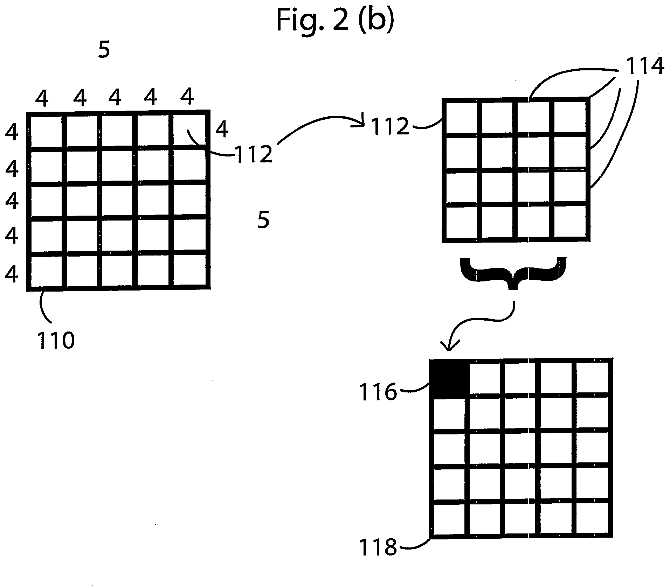

Figures 2 (a) and (b) show the derivation of a mini block from a frame. Figure 2 (a) shows frame 0 of a video sequence divided into blocks. In this example, it is contemplated that each block (110) is a 20x20 block, which will include 400 (20x20) pixels. The 400 pixels are divided into 25 groups of 16 pixels, i.e. a 5x5 block, each member of which is a 16 pixel group (112). The 16 pixels in each group (112) comprise a 4x4 block of pixels (114) from the 20x20 block. Each 16 pixel group is then averaged to a single piece of information (116), and the block may then be represented by a 5x5 mini block (118), each member of which represents an averaged, usually a rounded, pixel value. In particular each pixel in a mini block corresponds to a rectangle of pixels in the block, and its value is calculated by averaging the pixel values in the rectangle of the block to which it corresponds. When this has been completed for all the big blocks in a frame, the frame will then be represented by a mini frame. This mini frame has a fraction of the number of pixels of the original video frame, so takes a fraction of the memory and can be processed in a fraction of the time that would be required to process the corresponding source frame.

Where the big block has a different arrangement of pixels, i.e. 30x30, or some such, a correspondingly different arrangement of mini blocks is generated, but the principle is the same.

### Adjacent frame motion search (AFMS)

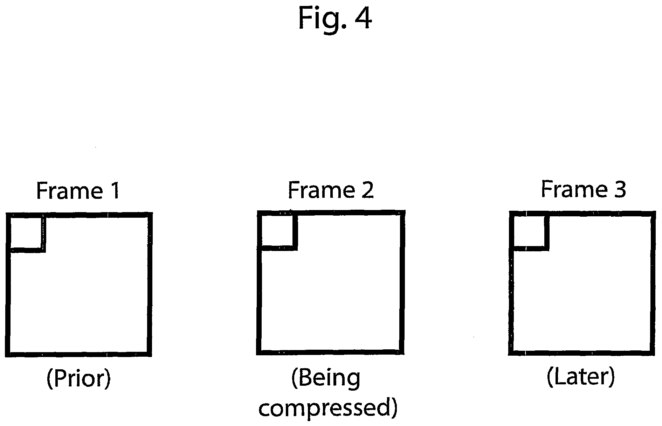

In the case where the frame or frames adjacent to the frame being compressed are being used as predictors as in the first three block formats discussed above and also as shown in figure 4, the process of encoding frame 1 utilises the nearest earlier frame, frame 0 and the nearest later frame, frame 2, the nearest earlier and later frames being used to predict frame 1, a potentially wide search is appropriate to find a good motion vector estimate. A frame and its nearest earlier frame are considered to be 'adjacent frames', as are a frame and its nearest later frame.

With unlimited processor time, all possible motion vectors for the big blocks could be searched to find the optimal match, for example each pixel of a first big block in a first frame could be compared with each pixel of each big block in a second frame until it can be established that an optimal match has been found: i.e. until the location of the best match of the first big block in the second frame has been established. Once the location of the first big block in the second key frame has been established it is possible to determine exactly the motion vector that resulted in the repositioning of the first big block between the first and second frames.

On current typical devices, the resolution and frame rate of the video expected can preclude the possibility of an exhaustive search. Instead, the process is carried out on the mini blocks on corresponding mini versions of the video frames scaled as described above. When a, possibly limited, search is complete using integer 'average' pixel motions of the mini blocks, sub pixel motions of the mini blocks are examined to refine the search. The sub pixel motions utilise the averaged information contained in each of the 'averaged' pixels in the for example 4x4 pixel group. The small size of these mini frame images reduces the search time and allows a much wider range of candidate motion vectors to be tested in the available time on a real time system, using an error function to estimate any errors over the blocks, to find a candidate best motion vector for each mini block. The error function can be any suitable error function, for example a mean square error function which may apply for example to pixels between the first frame and pixel values from the second frame.

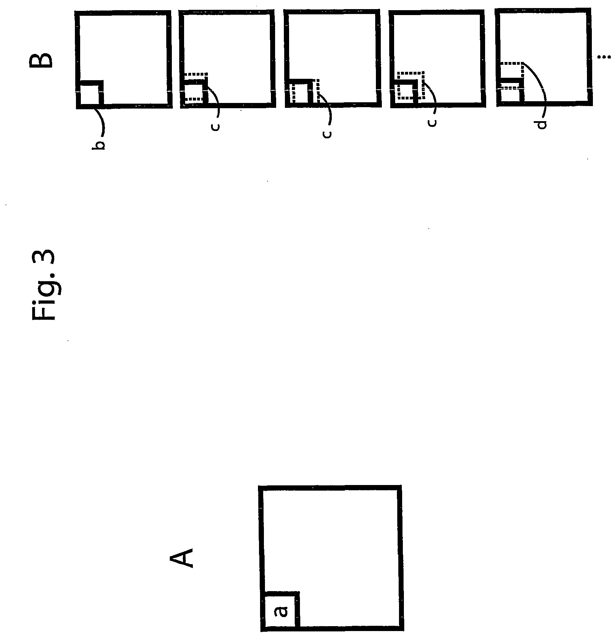

Once a candidate best motion vector is found for a mini block, the process is repeated with new mini-blocks at a larger size - for example four or nine times the previous mini block area, but never exceeding the original block size area. So a 5x5 mini-block could be replaces with a 10x10 mini block covering the same proportion of a larger version of the video frame. Corresponding motion vectors for these larger mini blocks are tested, and an iterative appropriate adjacent motion vector search (**IAAMVS**) is repeated until a local minimum for the error is found. For example, as shown in Figure 3 the first larger (20x20) block 'a' is contemplated to be positioned at the top left side of the first key frame A. This first larger block 'a' is compared as described above with the larger block 'b' at the top left side of the second key frame B, and then at three adjacent larger blocks 'c' (which are pixel aligned but not necessarily block aligned), for example blocks displaced horizontally, vertically or both an integer number of pixels from block b. This is repeated with the next 5 larger blocks 'd' positioned radially outwardly (again pixel aligned and displaced in the manner discussed), and so on. This search looks at these neighbouring possible larger blocks, and corresponding motions, to see if they provide a better match. In particular it is contemplated that each 'adjacent' larger block 'c' is offset for example one pixel from the larger block 'b' to which larger block 'a' is compared, similarly each 'larger' block 'd' is offset one pixel from the larger block 'c', and so on. In one implementation, such comparison steps are repeated as long as they give improvements, and for each improvement all nearest adjacent motion vectors are checked, the process ultimately continuing along the best direction. In another implementation, a further refinement of this method allows for comparisons to be carried out further afield to allow escape from local minimum errors which may not be a global minimum. This process of increasing the larger block size and applying the IAAMVS stops when the larger block size is equal to the block size.

So in summary: first, the best available motion vector is found with the smallest mini blocks. Then the block size is increased and the motion vector from the smaller motion blocks is used as the basis for the starting point for a new search for the best available motion vector at this new size. This process is repeated until the motion vector found is based on actual pixels in the unscaled video frame being compressed.

### Non adjacent frame motion search (NAFMS)

In the preferred invention, use is made of motion vectors already calculated for adjacent frames when calculating motion vectors between non adjacent frames, where non-adjacent frames include a first frame and a second frame where the first frame is not the nearest earlier or nearest later frame to the second frame. Examples of non-adjacent frames include frame 0 and frame 2, or frame 2 and frame 4. A consequence of using such already calculated motion vectors is that motion vectors for non adjacent frames are calculated later than those of the adjacent frames. In particular it is contemplated that the motion vectors for the non adjacent frames use the sum of the appropriate motion vectors for frames which are half the time apart as a first estimate of their values, with smaller search spaces around these values to improve the accuracy of the search.

### Initial motion search vector estimation

In one preferred implementation, the frames are decoded by the decoder in increasingly fine temporal granularity, starting with key frames, such as frames 0 and 32 in for example Figure 1, and then continuing with deltas such as frame 16 in Figure 1 of increasingly fine resolution (continuing with for example frame 8 and 24, then frames 4, 12, 20 and 28, and so on). This allows the player, if it is short of processor time or bandwidth, to decode only coarser temporal resolution frames.

The motion vectors for the delta frames which are furthest apart (and in this implementation decoded first) are generally the largest, and required potentially the largest search to find the best match. For example, referring again to Figure 1, a first frame 0 reflects a first frame of a video with a second frame 32 reflecting for example the last frame of the video, the delta frame decoded first will be frame 16, furthest apart from the two key frames 0 and 32. Then frames 0 and 16 will be used to decode frame 8, and so on. Instead of attempting a search from scratch at this temporal resolution, motion vectors of non-adjacent frames are estimated from the motion vectors of the temporally adjacent frames and the set of frames with motion estimates is built up as described below using frames of increasing temporal differences.

As frames F0, F1, F2, ... arrive for compressing (with Eab representing the motion vector between two earlier frames a and b and Lcd representing the motion vector between two later frames c and d), this is one possible order for calculating the motion vectors:

| Arriving Frame | Motion vectors calculated with AFMS | Motion vectors calculated with NAFMS with initial estimates given |
|---|---|---|
| 0 | [key frame so no motion vector] | |
| 1 | - | |
| 2 | F0-F1 (E01) and F1-F2 (L12) | |
| | [Reconstructing frame 1] | |
| 3 | - | |
| 4 | F2-F3 (E23) and F3-F4 (L34) | F0-F2 (E02) using E01+L12 and F2-F4 (L24) using E23+L34 |
| | [Reconstructing frame 3] | [Reconstructing frame 2] |
| 5 | - | |
| 6 | 4-5 (E45) and 5-6 (L56) | |
| | [Reconstructing frame 5] | |
| 7 | - | |
| 8 | 6-7 (E67) and 7-8 (L78) | 4-6 (E46) using E45+L56 and 6-8 (L68) using E67+L78; |
| | [Reconstructingframe7] | [Reconstructing frame 6] |
| | | 0-4 (E04) using E02+L24 and 4-8 (L48) using E46+L68 |
| | | [Reconstructing frame 8] |

It can be seen that when the number of frames reaches power of two, all the motion vectors can be estimated from the subdivisions.

For example, a simplified way of considering this process is to consider the raw data of a series of frames beginning with frame 0 and ending with frame 32: the intervening delta frames can be built up in the manner as follows.

First it is helpful to set out a binary representation of the frame number, so that instead of referring in decimal to frames 0, 1, 2, 3, ... 32 we also refer to them as frames 00000 (0) to 100000 (32), including 00000 (0), 00001 (1), 00010 (2), 00011 (3), 00100 (4), 00101 (5), 00110 (6), 00111 (7), 01000 (8), 01001 (9), 01010 (10), 01011 (11), 01100 (12), 01101 (13), 01110 (14), 01111 (15), 10000 (16), and so on to frame 100000 (32).

Based on the raw data in frame 00000 (0) and 00010 (2) we can generate motion vector estimates that provide frame 00001 (1). Similarly based on the raw data in frame 00010 (2) and 00100 (4) we can generate motion vector estimates that provide frame 00011 (3). This may be generalised such that adjacent frames ending in binary 0 (2, 4, 6 ...) provide motion vector estimates for intermediate frames ending in binary 1 (1, 3, 5, ...). Thus in a first run through a first estimate is generated for odd frames, from respective adjacent frames.

Zooming out, we can in an analogous fashion generate, in a second run through, motion vectors for frames that end in binary 10 (2, 6, 10, ...) from these already estimated motion vectors. For example the motion vector estimates for frame 2 will be based on the values estimated in the first run through, where the motion vectors for frame 1 were estimated based on the raw data of frames 0 and 2, and the motion vectors for frame 3 were estimated based on the raw data of frames 2 and 4. The values generated provide motion vector estimates for frame 2 based on the motion vector estimates of frame 0 to 2 and 2 to 4.

We can in an analogous fashion generate motion vectors that end in binary 100 (4, 12, 20 ...), binary 1000 (8, 24, ...) then binary 10000 (16). It is important to note that in each case except the initial odd frames case, the motion vector search starts with the estimates based on motion vector estimates of neighbouring values.

### Confirmation of motion vectors

It is important that the compressor sees exactly what the decompressor will see so that it can find the motion vectors and other corrections which will work best on the decompressor. When the chunk of frames has arrived in the compressor, and the motion vectors estimates have been made as above as part of the process of compression, the motion vectors can be verified, while encoding, before the video bitstream is output, for example transmitted to a decoder. The compression is not loss free, and the frames being compressed are updated to match the video being represented in the bitstream i.e. to what the decompressor produces (the decompressor doesn't have access to the exact original source, but only to a compressed and in general degraded version of it). This can have the effect of making the motion vectors with the best matches on the compressed / decompressed video different from those estimated from the original source. So at this stage, the motion vectors are checked using the estimated motion vectors, but in a different order - namely the order in which the frames will be decompressed, starting with the coarsest temporal resolution deltas. The possibly improved motion vectors are searched for using the same search techniques as the original estimates used, but with the decompressed frames replacing the original source frames. Where a better match is found, this replaces the original motion vector estimate.

### Bias

Modern mobile phone cameras can have an auto exposure function, which can change the values of pixels while preserving their relative values. Rather than update all the pixels individually, the compressor may adjust Y values by, for example, calculating the average values of Y over each motion block and adjusting for this in the bitstream as a single value for each block. This allows any Y bias in the block estimate to be corrected efficiently, if required.

### Block representations

There are four classes of block representations, or block types, supported by the compressor, making use of information available at the time of decompression:
1. Interpolated. These are based on the average between motion adjusted and bias adjusted blocks from the temporally closest known past and future video frames. For example this block type is suitable where there is some or no motion within a frame between the past and future video frames.
2. Earlier. These are based on the motion adjusted and bias adjusted blocks from the temporally closest known past video frame. For example this block type is suitable where there is motion near an edge of a frame, for example where motion near an edge of a frame in the temporally closest known past video frame will no longer be present in the temporally closest future video frame.
3. Later. These are based on the motion adjusted and bias adjusted blocks from the temporally closest known future video frame. For example this block type is suitable where there is motion near an edge of a frame, for example where motion near an edge of a frame in the temporally closest future video frame is new, i.e. not present in the earlier frame.
4. Intraframe. These are based on high quality intraframe compression. For example this block type is suitable where a small item or part of a frame is moving while the rest remains relatively stable, for example where the video covers a tennis match and the motion of a ball is followed through frames, i.e. when the motion search fails to find a good match from either the previous or later frame for this block.

Cases 1-3 allow for arbitrary pixels to be corrected. The corrections are typically small, so compress well, and in the preferred implementation of the invention are chosen to give more accurate representation in lower contrast areas. In one implementation, these blocks are split up and the variance in each section is used to represent the smoothness. In another implementation, the local contrast is calculated explicitly, and this value is used to set a maximum allowed error for each pixel.

Case 4 allows for filtering of the image to reduce noise, and hence data-rate. When this option is enabled, the filtering generally reduces the contrast of pixels which have locally outlying values, and hence which are more likely to be accentuated by noise. Reducing the contrast in this way has minor effects on the perceived image quality but gives a good saving in data rate.

The bitstream for the delta frames contains information such as the larger block size (i.e. 20x20, 30x30, and so on, as shown above); and also the block type for each block. For types 1-3, for each larger block the bitstream also contains information such as motion vectors, bias, identification of each pixel to be corrected (by for example sending the gap from the previous correction) and corrections to any estimates which used earlier or later frames. For type 4, the bitstream contains a high fidelity representation of each pixel in the block.

### Accuracy

Because some (delta) frames are constructed from other (key or delta) frames, the frames used as sources by most other frames (key frames and some delta frames) should be more accurately represented than the remaining frames. The choice of block representation (i.e. block type) is dependent on the accuracy required, with type 4 being used when types 1 - 3 are insufficiently accurate. The error rate acceptable where options 1-3 (lower data rate options) are selected is lower on delta frames which decoded earlier, and are used in the construction of a higher number of subsequent delta frames, and highest on delta frames which are decoded last, and not used in the construction of any further delta frames, as this reduces the average error rate for a given datarate. Where the blocks are far apart in time and will be used to generate multiple further blocks at decreasing separation, accuracy is required so any errors are not propagated over multiple frames.

The acceptable error can also depend on the variance within the block, where variance is a result of for example contrast within the block, with less varied blocks requiring a more accurate fit.

The compressor generates its corrections using only the information available to the decompressor so that the data sent to the decompressor applies to the information at the decompressor's disposal. This is significant because the information sent is most useful to the decompressor and is independent of any additional information the compressor may have available to it (but which is not available to the decoder).

### Sub pixel

Sub pixel motion can be simulated by averaging two motion blocks each with motion vectors which are an integer number of pixels horizontally and vertically, and which are for example either side of the correct motion. This means that averaging the blocks from earlier and later frames can result in estimates of sub pixel motion. Temporally close together frames with motions of an integer number of pixels often give the effect of appearing to have sub pixel motion when averaged. Hence the motion estimates between past and future can be chosen to be integer numbers of pixels in such a way that the averages between past and future frames in type 1 blocks effectively gives sub pixel motion estimation - but, importantly, without having to send or search for sub pixel motion vectors.

### Transition tables

In a preferred implementation of the invention, the bitstream encoding uses Forbidden's previously patented loss free "transition table" technology.

### Some advantages of temporal compression as described in this patent

Firstly, substantially every part of the contents of a middle frame is likely to be represented either as part of a previous frame, or as part of a future frame, or both. This means that representing a delta frame between two key frames almost always does not require completely new pixels to allow for motion, particularly camera motion.

Secondly, the use of averaging simulates sub pixel motion without the computational or data rate costs of sending it explicitly - integer only motion vectors suffice.

Thirdly, for editing or low data rate connections, video can be downloaded and played back easily at a wide range of frame rates without requiring download or decompression of non-displayed frames.

The advantages are not limited to those outlined herein.

The invention is not restricted to the details of the foregoing embodiments. For example the number of frames between key frames may not be a power of two, but may be any other number, and determining the content of delta frames between key frames separated by a number other than the power of two may involve subdividing the time by a different, more suitable number.

## Claims

1. A method of encoding a series of frames (100) in a video or media, including:
receiving a first key frame,
receiving subsequent chunks of frames including at least one key frame,
dividing each frame into a plurality of blocks,
subdividing a first block (110) of the plurality of blocks into a plurality of pixel groups,
averaging the pixels (114) in each pixel group (112) to generate a single value (116),
creating a first mini-block (118) wherein each element (116) of said first mini block (118) corresponds with a pixel group (112) of the corresponding first block (110) and contains said single value,
repeating the previous subdividing, averaging and creating steps for each block of each frame of the chunk,
comparing a first of said plurality of mini blocks of a first frame with mini blocks of at least one further frame, where said at least one further frame mini blocks are not necessarily aligned to mini blocks in the first frame, until a best match is achieved, said best match dependent on an error calculation;
estimating respective motion vectors to map each mini block of said first frame to said best match mini block of each of said at least one further frame;
wherein estimates of motion vectors for each mini block of each frame where the binary number of the frame ends in a '1' are generated in a first pass at a first magnification from raw data of said frame and from temporally adjacent, neighbouring frames, and estimates of motion vectors for each frame where the binary number of the frame ends in a '10' is generated at a second, less granular, magnification from said earlier motion vector estimates, said motion vector estimates being added together to form a starting point of a local search for a new best match motion vector for the said frame whose frame number ends in '10', whereupon with the new best match motion vector, each frame where the binary number of the frame ends in '100', '1000', '10000', and so on, this list of frame numbers continuing until the last power of two which is not a key frame, is generated at said less granular magnification from earlier motion vector estimates until a final motion estimate for the frame mid-way between the first and last frame depends on earlier estimates, such that each motion vector estimate is based on values calculated from neighbouring estimates.

2. The method as claimed in claim 1 wherein said at least one further frame is at least two further frames.

3. The method as claimed in claim 2 wherein said at least two further frames includes a temporally earlier frame EF than said first frame and a temporally later frame LF than said first frame.

4. The method of any one of claims 1 to 3 including the further step of, before the frames of the chunk are encoded for transmission:
reconstructing the video from the compressed chunk by, starting with the frame in the chunk midway between two adjacent key frames and continuing through all the other frames in the chunk with frames midway between frames from the set which includes key frames and previously reconstructed frames, applying the motion vectors or an intra frame alternative to each block within each frame thereto;
comparing the result to the frames as they will be decompressed;
wherein for all motion vectors in said further frames and their respective mini-blocks that meet the criteria that:
(i) the motion vector gives the lowest error in its further frame, and
(ii) said error is below a threshold,
those motion vectors and their respective mini-blocks are used;
if there are no motion vectors that meet the criteria, intra frame compression is used; and
replacing the original frames to be compressed with the resulting decompressed frames and storing same for use as said encoding process continues.

5. The method of claim 4 wherein as part of said comparing step:
blocks of pixels in said EF with respective motion vectors applied are compared to respective blocks of pixels in said first frame and discarded if a calculated error exceeds a threshold;
blocks of pixels in said LF with respective motion vectors applied are compared to respective blocks of pixels in said first frame and blocks of pixels and their respective motion vectors from said LF are discarded if a calculated error exceeds a threshold;
an averaged value of the blocks of pixels from the EF and LF with the respective motion vectors applied are compared to respective blocks of pixels in said first frame and discarded if a calculated error exceeds a threshold, and wherein
if said EF, LF and averaged EF and LF values are all discarded, an intra-frame calculation is relied upon to determine coding of the block of pixels, otherwise the combination of blocks of pixels and their respective vectors which gives the lowest error is used to adjust the frames for use in the compression.

6. The method of claim 5 further including the step of transmitting or storing each encoded chunk, with at least one key frame and said determined motion vectors transmitted to the decoder for the decoder to reconstruct the chunk.

7. The method of claim 4, 5 or 6 further including the step of adding additional data when encoding from any number of bias information, gaps to corrections and corrections to temporal estimates.

8. The method of claim 7 wherein said additional data relates to at least one individual pixel.

9. An encoder for carrying out the steps of any one of claims 1 to 8.

10. A media player including an encoder in accordance with claim 9.

## Patentansprüche

1. Verfahren zum Codieren einer Reihe von Einzelbildern (100) in einem Video oder einem Medium, das Folgendes umfasst:
Empfangen eines ersten Schlüsselbildes,
Empfangen nachfolgender Blöcke von Einzelbildern, die wenigstens ein Schlüsselbild enthalten,
Unterteilen jedes Einzelbildes in mehrere Blöcke,
weiteres Unterteilen eines ersten Blocks (110) der mehreren Blöcke in mehrere Pixel-Gruppen,
Bilden des Mittelwertes der Pixel (114) in jeder Pixel-Gruppe (112), um einen einzelnen Wert (160) zu erzeugen,
Erzeugen eines ersten Miniblocks (118), wobei jedes Element (116) des ersten Miniblocks (118) einer Pixel-Gruppe (112) des entsprechenden ersten Blocks (110) entspricht und den einzelnen Wert enthält,
Wiederholen der vorhergehenden Schritte des weiteren Unterteilens, des Bildens des Mittelwertes und des Erzeugens für jeden Block jedes Einzelbildes des Blocks,
Vergleichen eines ersten der mehreren Miniblöcke eines ersten Einzelbildes mit Miniblöcken wenigstens eines weiteren Einzelbildes, wobei die Miniblöcke des wenigstens einen weiteren Einzelbildes nicht notwendig auf Miniblöcke in dem ersten Einzelbild ausgerichtet sind, bis eine beste Anpassung erreicht ist, wobei die beste Anpassung von einer Fehlerrechnung abhängt;
Schätzen jeweiliger Bewegungsvektoren, um jeden Miniblock des ersten Einzelbildes auf den bestangepassten Miniblock jedes des wenigstens einen weiteren Einzelbildes abzubilden;
wobei Schätzungen von Bewegungsvektoren für jeden Block jedes Einzelbildes, wo die Binärzahl des Einzelbildes mit einer "1" endet, in einem ersten Durchlauf mit einer ersten Vergrößerung aus Rohdaten des Einzelbildes und aus zeitlich angrenzenden, benachbarten Einzelbildern erzeugt werden und Schätzungen von Bewegungsvektoren für jedes Einzelbild, wo die Binärzahl des Einzelbildes mit "10" endet, mit einer zweiten, weniger körnigen Vergrößerung aus den früheren Bewegungsvektorschätzungen erzeugt werden, wobei die Bewegungsvektorschätzungen zueinander addiert werden, um einen Ausgangspunkt einer lokalen Suche nach einem neuen bestangepassten Bewegungsvektor für das Einzelbild, dessen Einzelbildnummer mit "10" endet, zu bilden, woraufhin mit dem neuen bestangepassten Bewegungsvektor jedes Einzelbild, wo die Binärzahl des Einzelbildes mit "100", "1000", "10000" usw. endet, wobei diese Liste von Einzelbildnummern bis zur letzten Zweierpotenz, die kein Schlüsselbild ist, fortgesetzt wird, mit der weniger körnigen Vergrößerung aus früheren Bewegungsvektorschätzungen erzeugt wird, bis eine letzte Bewegungsschätzung für das Einzelbild in der Mitte zwischen dem ersten und dem letzten Einzelbild von früheren Schätzungen abhängt, so dass jede Bewegungsvektorschätzung auf Werten beruht, die aus benachbarten Schätzungen berechnet werden.

2. Verfahren nach Anspruch 1, wobei das wenigstens eine weitere Einzelbild wenigstens zwei weitere Einzelbilder umfasst.

3. Verfahren nach Anspruch 2, wobei die wenigstens zwei weiteren Einzelbilder ein Einzelbild EF, das zeitlich früher als das erste Einzelbild ist, und ein Einzelbild LF, das zeitlich später als das erste Einzelbild ist, enthalten.

4. Verfahren nach einem der Ansprüche 1 bis 3, das vor dem Codieren der Einzelbilder für den Block für die Übertragung den folgenden weiteren Schritt umfasst:
Rekonstruieren des Videos aus dem komprimierten Block beginnend bei dem Einzelbild in dem Block in der Mitte zwischen zwei benachbarten Schlüsselbildern und fortgesetzt über alle anderen Einzelbilder in dem Block mit Einzelbildern in der Mitte zwischen Einzelbildern aus der Menge, die Schlüsselbilder und früher rekonstruierte Einzelbilder enthält, durch Anwenden darauf der Bewegungsvektoren oder eines Zwischeneinzelbildes, das für jeden Block in jedem Einzelbild alternativ ist;
Vergleichen des Ergebnisses mit den Einzelbildern, wenn sie dekomprimiert werden;
wobei für alle Bewegungsvektoren in den weiteren Einzelbildern und ihren jeweiligen Miniblöcken, die die folgenden Kriterien erfüllen:
(i)der Bewegungsvektor ergibt den kleinsten Fehler in seinem weiteren Einzelbild und
(ii) der Fehler liegt unter einem Schwellenwert,
diese Bewegungsvektoren und ihre jeweiligen Miniblöcke verwendet werden;
wobei dann, wenn keine Bewegungsvektoren vorhanden sind, die die Kriterien erfüllen, eine Zwischeneinzelbildkompression verwendet wird; und
Ersetzen der zu komprimierenden ursprünglichen Einzelbilder durch die resultierenden dekomprimierten Einzelbilder und Speichern derselben für die Verwendung, wenn der Codierungsprozess fortgesetzt wird.

5. Verfahren nach Anspruch 4, wobei als Teil des Vergleichsschrittes:
Blöcke von Pixeln in dem EF mit jeweiligen angewendeten Bewegungsvektoren mit jeweiligen Blöcken von Pixeln in dem ersten Einzelbild verglichen werden und verworfen werden, falls ein berechneter Fehler einen Schwellenwert überschreitet;
Blöcke von Pixeln in dem LF mit jeweiligen angewendeten Bewegungsvektoren mit jeweiligen Blöcken von Pixeln in dem ersten Einzelbild verglichen werden und Blöcke von Pixeln und ihre jeweiligen Bewegungsvektoren aus dem LF verworfen werden, falls ein berechneter Fehler einen Schwellenwert überschreitet;
ein gemittelter Wert der Blöcke von Pixeln aus dem EF und dem LF mit jeweiligen angewendeten Bewegungsvektoren mit entsprechenden Blöcken von Pixeln in dem ersten Einzelbild verglichen werden und verworfen werden, falls ein berechneter Fehler einen Schwellenwert überschreitet, und wobei
dann, wenn der EF, der LF und ihre gemittelten Versionen verworfen werden, sich auf eine Zwischeneinzelbildberechnung gestützt wird, um die Codierung des Blocks von Pixeln zu bestimmen, während andernfalls die Kombination von Blöcken von Pixeln und ihrer jeweiligen Vektoren, die den kleinsten Fehler ergibt, verwendet wird, um die Einzelbilder für die Verwendung bei der Kompression einzustellen.

6. Verfahren nach Anspruch 5, das ferner den Schritt des Übertragens oder Speicherns jedes codierten Blocks umfasst, wobei wenigstens ein Schlüsselbild und die bestimmten Bewegungsvektoren an den Decodierer übertragen werden, damit der Decodierer den Block rekonstruiert.

7. Verfahren nach Anspruch 4, 5 oder 6, das ferner den Schritt des Addierens zusätzlicher Daten umfasst, wenn aus irgendeiner Anzahl von Abweichungsinformationen, Lücken zu Korrekturen und Korrekturen an zeitlichen Schätzungen codiert wird.

8. Verfahren nach Anspruch 7, wobei sich die zusätzlichen Daten auf wenigstens ein einzelnes Pixel beziehen.

9. Codierer zum Ausführen der Schritte nach einem der Ansprüche 1 bis 8.

10. Medienabspielgerät, das einen Codierer nach Anspruch 9 enthält.

## Revendications

1. Procédé de codage d'une série de trames (100) dans une vidéo ou un média, incluant :
la réception d'une première trame clé ;
la réception de tronçons subséquents de trames qui incluent au moins une trame clé ;
la division de chaque trame selon une pluralité de blocs ;
la subdivision d'un premier bloc (110) de la pluralité de blocs selon une pluralité de groupes de pixels ;
le calcul de la moyenne des pixels (114) dans chaque groupe de pixels (112) de manière à générer une unique valeur (116) ;
la création d'un premier mini-bloc (118), dans lequel chaque élément (116) dudit premier mini-bloc (118) correspond à un groupe de pixels (112) du premier bloc correspondant (110) et contient ladite unique valeur ;
la répétition des étapes précédentes de subdivision, de calcul de moyenne et de création pour chaque bloc de chaque trame du tronçon ;
la comparaison d'un premier mini-bloc de ladite pluralité de mini-blocs d'une première trame avec des mini-blocs d'au moins une autre trame, dans lequel lesdits mini-blocs de ladite au moins une autre trame ne sont pas nécessairement alignés par rapport à des mini-blocs dans la première trame, jusqu'à ce qu'une meilleure concordance soit réalisée, ladite meilleure concordance dépendant d'un calcul d'erreur ;
l'estimation de vecteurs de déplacement respectifs pour cartographier chaque mini-bloc de ladite première trame par rapport audit mini-bloc de meilleure concordance de chaque trame de ladite au moins une autre trame ; dans lequel :
des estimations de vecteurs de déplacement pour chaque mini-bloc de chaque trame pour laquelle le numéro binaire de la trame se termine par un '1' sont générées lors d'une première passe à un premier agrandissement à partir de données brutes de ladite trame et à partir de trames voisines temporellement adjacentes, et des estimations de vecteurs de déplacement pour chaque trame pour laquelle le numéro binaire de la trame se termine par un '10' sont générées à un second agrandissement moins granulaire à partir desdites estimations de vecteur de déplacement antérieures, lesdites estimations de vecteur de déplacement étant ajoutées ensemble de manière à former un point de démarrage d'une recherche locale d'un nouveau vecteur de déplacement de meilleure concordance pour ladite trame dont le numéro de trame se termine par '10', suite à quoi, à l'aide du nouveau vecteur de déplacement de meilleure concordance, chaque trame, pour laquelle le numéro binaire de la trame se termine par '100', '1000', '10000' et ainsi de suite, cette liste de numéros de trame se poursuivant jusqu'à la dernière puissance de deux qui n'est pas une trame clé, est générée audit agrandissement moins granulaire à partir d'estimations de vecteur de déplacement antérieures jusqu'à ce qu'une estimation de déplacement finale pour la trame qui est à mi-chemin entre la première trame et la dernière trame dépende d'estimations antérieures, de telle sorte que chaque estimation de vecteur de déplacement soit basée sur des valeurs qui sont calculées à partir d'estimations voisines.

2. Procédé tel que revendiqué selon la revendication 1, dans lequel ladite au moins une autre trame est au moins deux autre trames.

3. Procédé tel que revendiqué selon la revendication 2, dans lequel lesdites au moins deux autres trames incluent une trame temporellement antérieure EF par rapport à ladite première trame et une trame temporellement ultérieure LF par rapport à ladite première trame.

4. Procédé selon l'une quelconque des revendications 1 à 3, incluant, avant que les trames du tronçon ne soient codées pour leur transmission, l'étape supplémentaire consistant à effectuer :
la reconstruction de la vidéo à partir du tronçon compressé, en démarrant par la trame dans le tronçon qui est à mi-chemin entre deux trames clé adjacentes et en continuant, en parcourant toutes les autres trames dans le tronçon, avec des trames qui sont à mi-chemin entre des trames prises parmi le jeu qui inclut des trames clé et des trames reconstruites au préalable, en leur appliquant les vecteurs de déplacement ou une alternative intra-trame à chaque bloc à l'intérieur de chaque trame ;
la comparaison du résultat avec les trames lorsqu'elles seront décompressées ; dans lequel :
pour tous les vecteurs de déplacement dans lesdites autres trames et leurs mini-blocs respectifs qui satisfont les critères consistant en ce que :
(i) le vecteur de déplacement donne l'erreur la plus faible dans son autre trame ; et
(ii) ladite erreur est en-deçà d'un seuil,
ces vecteurs de déplacement et leurs mini-blocs respectifs sont utilisés ;
s'il n'y a pas de vecteurs de déplacement qui satisfont les critères, une compression intra-trame est utilisée ; et
le remplacement des trames originales qui doivent être compressées par les trames décompressées résultantes et leur stockage pour leur utilisation au fil de la poursuite dudit processus de codage.

5. Procédé selon la revendication 4, dans lequel, en tant que partie de ladite étape de comparaison :
des blocs de pixels dans ladite EF avec des vecteurs de déplacement respectifs appliqués sont comparés à des blocs de pixels respectifs dans ladite première trame et sont écartés si une erreur calculée excède un seuil ;
des blocs de pixels dans ladite LF avec des vecteurs de déplacement respectifs appliqués sont comparés à des blocs de pixels respectifs dans ladite première trame et des blocs de pixels et leurs vecteurs de déplacement respectifs issus de ladite LF sont écartés si une erreur calculée excède un seuil ;
des valeurs moyennes des blocs de pixels issus de l'EF et de la LF avec les vecteurs de déplacement respectifs appliqués sont comparées à des blocs de pixels respectifs dans ladite première trame et sont écartées si une erreur calculée excède un seuil ; et dans lequel :
si lesdites valeurs d'EF, de LF ainsi que d'EF et de LF moyennées sont toutes écartées, on se repose sur un calcul intra-trame pour déterminer le codage du bloc de pixels, sinon la combinaison de blocs de pixels et de leurs vecteurs de déplacement respectifs qui donne l'erreur la plus faible est utilisée pour régler les trames pour leur utilisation au niveau de la compression.

6. Procédé selon la revendication 5, incluant en outre l'étape de transmission ou de stockage de chaque tronçon codé, au moins une trame clé et lesdits vecteurs de déplacement déterminés étant transmis au décodeur pour que le décodeur reconstruise le tronçon.

7. Procédé selon la revendication 4, 5 ou 6, incluant en outre l'étape d'ajout de données additionnelles lors d'un codage à partir de n'importe quel nombre d'éléments informationnels pris parmi une information de distorsion, des espaces par rapport à des corrections et des corrections par rapport à des estimations temporelles.

8. Procédé selon la revendication 7, dans lequel lesdites données additionnelles concernent au moins un pixel individuel.

9. Codeur pour mettre en oeuvre les étapes selon l'une quelconque des revendications 1 à 8.

10. Lecteur de média incluant un codeur selon la revendication 9.
